(19) **Europäisches Patentamt / European Patent Office / Office européen des brevets**

(11) **EP 2 297 475 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: **09772374.6**

(22) Anmeldetag: **26.06.2009**

(51) Int Cl.:
**F16D 23/12** *(2006.01)*    **F16H 25/12** *(2006.01)*

(86) Internationale Anmeldenummer:
**PCT/EP2009/058020**

(87) Internationale Veröffentlichungsnummer:
**WO 2010/000674 (07.01.2010 Gazette 2010/01)**

(54) **VORSPANNEINHEIT**

PRE-TENSIONING UNIT

UNITÉ DE PRÉCHARGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.07.2008 DE 102008031512**

(43) Veröffentlichungstag der Anmeldung:
**23.03.2011 Patentblatt 2011/12**

(73) Patentinhaber: **Schaeffler Technologies AG & Co. KG**
**91074 Herzogenaurach (DE)**

(72) Erfinder:
• **JURJANZ, Ramon**
**91058 Erlangen (DE)**
• **SMETANA, Tomas**
**91074 Herzogenaurach (DE)**

(56) Entgegenhaltungen:
**WO-A-03/076827    US-A- 5 505 285**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Gebiet der Erfindung

Die Erfindung betrifft eine Vorspanneinheit. Im Besonderen betrifft die Erfindung eine Vorspanneinheit mit einer ersten Rampenscheibe und einer zweiten Rampenscheibe, die beide mehrere Rampenkonturen in einer Seite einer ringförmigen Fläche der Rampenscheiben ausgeformt haben. Zwischen den jeweiligen Rampenkonturen der ersten Rampenscheibe und der zweiten Rampenscheibe sind mehrere Wälzkörper derart angeordnet, dass in der Vorspanneinheit durch Dreh-Schwenken einer der beiden Rampenscheiben relativ zu der anderen nicht dreh-schwenkbaren Rampenscheibe um eine Achse die Wälzkörper an den Rampenkonturen auf- und/oder absteigen. Die Wälzkörper sind in einem Käfig rollend gehalten.

### Hintergrund der Erfindung

Derartige Vorspanneinheiten finden bei Getrieben von Kraftfahrzeugen Verwendung, um insbesondere die Betätigung einer Reibungskupplung im Antriebsstrang eines Kraftfahrzeugs zu ermöglichen. Mögliche Einsatzgebiete einer Vorspanneinheit sind Doppelkupplungen, Differenziale mit Torque Vectoring oder Verteilergetriebe. In allen Fällen wird ein Lamellenpaket mit Hilfe einer axialen Vorspanneinheit betätigt (zusammengedrückt). Eine der Rampenscheiben wird durch einen Elektromotor mit entweder einem Stirnrad- oder einem Schneckengetriebe angetrieben. Eine axiale Vorspanneinheit wird ebenfalls in den Kegelraddifferenzialen zur Vorspannung von Lamellenkupplungen der Überlagerungsstufen eingesetzt.

Die unveröffentlichte deutsche Patentanmeldung (firmeninternes Aktenzeichen: E2008015) offenbart eine Vorspanneinheit mit einer ersten Rampenscheibe und einer zweiten Rampenscheibe, die beide mehrere Rampenkonturen in einer Seite einer ringförmigen Fläche der Rampenscheiben ausgeformt haben, wobei jede Rampenkontur eine erste Rampe und eine zweite Rampe umfasst, so dass zwischen der ersten und der zweiten Rampenscheibe mindestens ein Wälzkörper derart angeordnet ist, dass in der Vorspanneinheit durch Dreh-Schwenken wenigstens einer der beiden Rampenscheiben relativ zu der anderen Rampenscheibe die Wälzkörper an den Rampenkonturen auf- und/oder absteigen. Dabei sind die Rampenscheiben derart ausgestaltet, dass zwischen der Seite der ringförmigen Fläche der Rampenscheiben, die keine Rampenkonturen umfassen, und den benachbarten Elementen der jeweiligen Rampenscheiben mehrere Hohlräume ausgebildet sind.

Die deutsche Patentschrift DE 10 2005 053 555 B3 offenbart eine Axialverstellvorrichtung in Form einer Kugelrampenanordnung. Die Axialverstellvorrichtung umfasst zwei auf einer gemeinsamen Achse zentrierte Scheiben, von denen eine axial abgestützt ist und die andere axial verschiebbar ist und von denen zumindest eine drehend antreibbar ist. Die beiden Scheiben weisen jeweils auf ihren zueinander zugewandten Stirnflächen eine gleich große Mehrzahl von in Umfangsrichtung verlaufenden Kugelrinnen auf. Die beiden Scheiben werden also mit Kugeln als Wälzkörper gelagert.

Die U.S.-Patentschrift 5,485,904 offenbart ebenfalls eine Vorspanneinheit, deren Rappenscheiben mittels Kugeln als Wälzkörper gegeneinander verdrehbar angeordnet sind.

Ebenso offenbart das U.S.-Patent 5,620,072 eine Vorspanneinheit für eine Lamellenkupplung, deren Rampenscheiben ebenfalls mit Kugeln als Wälzkörper gegeneinander verdrehbar angeordnet sind.

Die deutsche Patentschrift DE 10 2004 015 271 B4 offenbart eine Drehmoment-Übertragungsvorrichtung. Hier sind die Wälzkörper und das Axiallager auf einem Teilkreis angebracht, der den gleichen Durchmesser aufweist. Als Wälzkörper werden Kugeln verwendet.

Der Erfindung liegt die Aufgabe zugrunde, eine kostengünstige, gewichtsreduzierte, verschleißarme und bauraumreduzierte Vorspanneinheit zu schaffen, die zur Aufnahme von Radial- und/oder Axialkräften ausgebildet ist.

Die obige Aufgabe wird durch eine Vorspanneinheit gelöst, die die Merkmale des Anspruchs 1 umfasst.

Bei der erfindungsgemäßen Vorspanneinheit ist von Vorteil, dass zumindest die erste Rampenscheibe, der Käfig und die zweite Rampenscheibe in einen Haltetopf gesetzt sind. Mit mindestens einem Halteelement ist der Haltetopf drehfest mit einem Gehäuse verbunden. Zwischen dem Haltetopf und der nicht dreh-schwenkbaren Rampenscheibe zur Axialführung sind mehrere Wälzkörper angeordnet.

Zumindest die erste Rampenscheibe, der Käfig, die zweite Rampenscheibe und der Haltetopf sind in einen Drehtopf eingesetzt, der mit der dreh-schwenkbaren Rampenscheibe zusammenwirkt. Der Drehtopf hat mehrere Konturen ausgeformt, die mit entsprechenden Konturen der dreh-schwenkbaren Rampenscheibe zusammenwirken. Es ist von besonderem Vorteil, wenn die Konturen des Drehtopfes eine keilförmige Gestalt aufweisen.

Der Haltetopf selbst hat eine radial umlaufende Wand ausgebildet, die für jeden der Wälzkörper eine Laufbahn ausgebildet hat. Hierzu hat die nicht dreh-schwenkbare Rampenscheibe ebenfalls eine radial umlaufende Wand ausgeformt, die ebenfalls für jeden der Wälzkörper eine Laufbahn ausgebildet hat. Somit sind die nicht dreh-schwenkbare Rampenscheibe und der Haltetopf relativ zueinander mit reduzierter Reibung axial bewegbar. Die Laufbahnen in der radial umlaufenden Wand des Haltetopfes und die Laufbahnen in der radial umlaufenden Wand der nicht dreh-schwenkbaren Rampenscheibe sind gleich verteilt angeordnet. Vorteilhafter Weise sind drei Laufbahnen ausgebildet, wobei in den einander zugeordneten Laufbahnen des Haltetopfes und der nicht dreh-schwenkbaren Rampenscheibe jeweils ein als Kugel ausgeformter Walzkörper geführt ist.

Zwischen der dreh-schwenkbaren Rampenscheibe und dem Haltetopf ist eine Anlaufscheibe vorgesehen. Ebenso ist zwischen dem Haltetopf und dem Drehtopf eine Winkelscheibe vorgesehen. Am Drehtopf ist ein Betätigungselement ausgebildet, über das der Drehtopf um die Achse schwenkbar ist. Das Betätigungselement ist in Form eines Zahnstangenelements ausgebildet. Das Betätigungselement wird über einen Elektromotor angetrieben, wodurch sich eine axiale Bewegung der Vorspanneinheit einstellt.

Für die Ausgestaltung der Rampenkontur gibt es mehrere Möglichkeiten. Es ist möglich, dass jede Rampenkontur eine erste Rampe und eine zweite Rampe umfasst, die beide aufeinander zu geneigt sind und im Querschnitt die Form eines überstumpfwinkligen Dreiecks bilden. Eine weitere Möglichkeit ist, dass jede Rampenkontur eine im Wesentlichen einheitliche Lauffläche ausgeformt hat, die gegenüber der Achse der Vorspanneinheit eine konstante Neigung besitzt. Ferner ist es möglich, dass jede Rampenkontur eine im Wesentlichen einheitliche Lauffläche ausgeformt hat, die gegenüber der Achse der Vorspanneinheit eine variable Neigung besitzt. Bei den Rampenkonturen mit der im Wesentlichen einheitlichen Lauffläche ist es von Vorteil, eine Anfangskontaktstelle und eine Endkontaktstelle für die Wälzkörper vorzusehen, wobei an der Endkontaktstelle für die Wälzkörper ein Endanschlag ausgeformt ist. Der Endanschlag ist am tiefsten Punkt der Laufbahn ausgebildet.

Die mechanisch beste Konstruktion ist gegeben, wenn drei Wälzkörper zwischen den beiden Rampenscheiben gleich verteilt angeordnet sind, wobei jede der beiden Rampenscheiben auch drei Rampenkonturen ausgebildet hat. Die Rampenkonturen und folglich auch die Wälzkörper sind dabei mit einem Winkel von 120° voneinander auf den Rampenscheiben beabstandet.

Für die Produktion der Vorspanneinheit ist es von Vorteil, wenn die beiden Rampenscheiben kalt geformte Bauteile aus einem Blechrohling sind. Das Kaltumformen des Blechrohlings bildet die Rampenkonturen und die Laufflächen für die Wälzkörper aus. Ferner bildet das Kaltumformen bei der nicht dreh-schwenkbaren Rampenscheibe die radial umlaufende Wand und die Laufbahnen für die Wälzkörper aus. Ebenso sind der Haltetopf und der Drehtopf kalt geformte Bauteile aus einem Blechrohling. Zumindest die Bauteile der Rampenkonturen sind an der Lauffläche für die Wälzkörper wälztauglich gehärtet. Das Material der Blechrohlinge ist kaltumformbarer Stahl des Typs "16 MnCr 5". Ebenso ist es möglich, dass das Material der Blechrohlinge ein kaltumformbarer Stahl des Typs "C45" ist, wobei die umgeformten Blechrohlinge für die mechanische Belastung in der Vorspanneinheit härtbar sind.

Die Wälzkörper zwischen der ersten und der zweiten Rampenscheibe können als Kugeln, als Rollen oder als Kegelstümpfe ausgebildet sein.

Die erste Rampenscheibe, der Käfig, die zweite Rampenscheibe, die Anlaufscheibe, der Haltetopf, die Winkelscheibe und der Drehtopf der Vorspanneinheit sind zu einer vormontierten Einheit zusammengefügt. Die nicht dreh-schwenkbare Rampenscheibe ist gegenüber dem Drehtopf in Richtung der Achse der Vorspanneinheit durch eine Verstemmung gesichert.

Die Vorspanneinheit ist insbesondere zur Verwendung in Verteilergetrieben und Differenzialen von Fahrzeugen vorgesehen.

Im Folgenden sollen Ausführungsbeispiele die Erfindung und ihre Vorteile anhand der beigefügten Figuren näher erläutern.

Figur 1    zeigt eine Explosionsdarstellung einer Vorspanneinheit gemäß dem Stand der Technik, die nach dem RLF-Prinzip arbeitet;

Figur 2    zeigt die Vorspanneinheit aus Figur 1 in perspektivischer Ansicht und als zusammengebaute Einheit;

Figur 3    zeigt eine perspektivische Ansicht einer anderen Ausführungsform einer Vorspanneinheit, die aus dem Stand der Technik bekannt ist;

Figur 4    zeigt eine perspektivische Ansicht einer weiteren Ausführungsform einer Vorspanneinheit, die aus dem Stand der Technik bekannt ist;

Figur 5    zeigt eine perspektivische Ansicht einer als Baugruppe montierten erfindungsgemäßen Vorspanneinheit;

Figur 6    zeigt eine Draufsicht einer als Baugruppe montierten erfindungsgemäßen Vorspanneinheit;

Figur 7    zeigt eine Seitenansicht einer als Baugruppe montierten erfindungsgemäßen Vorspanneinheit;

Figur 8    zeigt eine Explosionsdarstellung der erfindungsgemäßen Vorspanneinheit, die nach dem RLF-Prinzip arbeitet;

Figur 9    zeigt eine Schnittansicht der als Baugruppe montierten erfindungsgemäßen Vorspanneinheit;

Figur 10   zeigt eine Draufsicht auf die in Figur 9 mit X bezeichnete Schnittfläche der erfindungsgemäßen Vorspanneinheit;

Figur 11   zeigt eine Draufsicht auf die in Figur 9 mit Y bezeichnete Schnittfläche der erfindungsgemäßen Vorspanneinheit;

Figur 12    verdeutlicht das Funktionsprinzip der erfindungsgemäßen Vorspanneinheit;

Figur 13    zeigt in schematischer Darstellung die bei der erfindungsgemä-βen Vorspanneinheit wirkenden Kräfte und

Figur 14    zeigt eine schematische Draufsicht auf die erfindungsgemäße Vorspanneinheit und der wirkenden Kräfte.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Obwohl sich die nachfolgende Beschreibung der Vorspanneinheit 1 auf die Verwendung von drei Rollen als Wälzkörper 3 zwischen den Rampenscheiben 2, 5 bezieht, soll dies nicht als eine Beschränkung der Erfindung aufgefasst werden. Wie bereits der vorangehenden Beschreibung zu entnehmen ist, können zwischen der ersten und der zweiten Rampenscheibe 2, 5 drei bis fünf Rollen angeordnet sein.

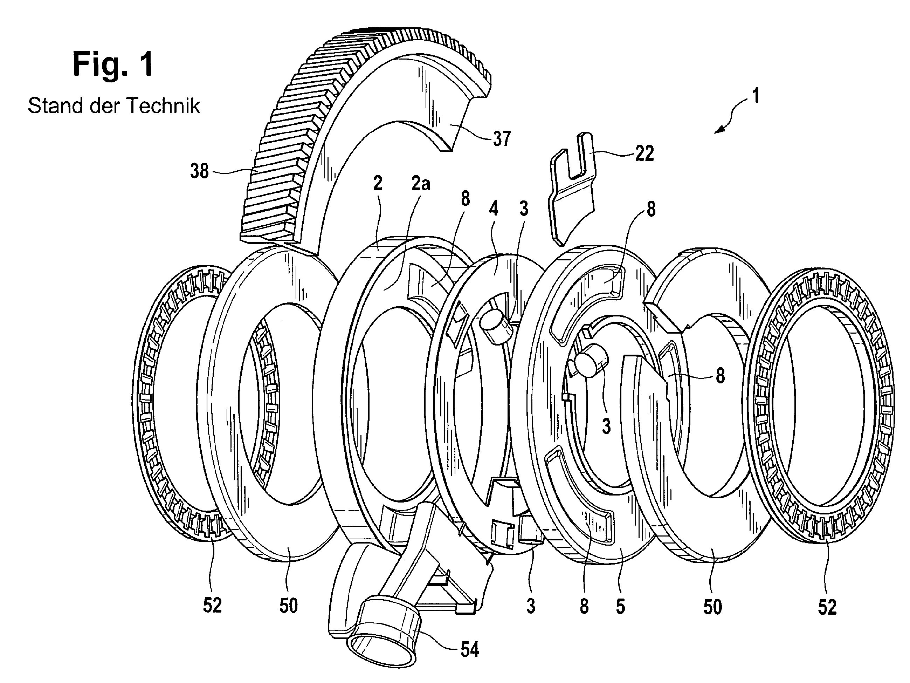

**Figur 1** zeigt eine perspektivische Ansicht einer Explosionsdarstellung einer aus dem Stand der Technik bekannten Vorspanneinheit 1. Die Vorspanneinheit 1 ist im Wesentlichen aus einer ersten Rampenscheibe 2, einer zweiten Rampenscheibe 5 und einem Käfig 4 für Wälzkörper 3 aufgebaut. Beide Rampenscheiben 2 und 5 haben mehrere Rampenkonturen 8 in einer Seite einer ringförmigen Fläche 2a bzw. 5a der Rampenscheiben 2 und 5 ausgeformt. Zwischen den jeweiligen Rampenkonturen 8 der ersten Rampenscheibe 2 und der zweiten Rampenscheibe 5 ist jeweils ein Wälzkörper 3 angeordnet. Die Wälzkörper 3 sind im Käfig 4 gehalten. Die erste Rampenscheibe 2 ist mit einem Betätigungselement 37 verbunden, über das die erste Rampenscheibe 2 verdreh-schwenkbar ist. An das Betätigungselement 37 greifen entsprechende mechanische Teile des Getriebes an. Das Betätigungselement 37 hat an seiner Außenkontur eine Verzahnung 38 ausgeformt. Das Betätigungselement 37 hat in dieser Ausführungsform die Form eines Kreissektors. Es ist für einen Fachmann selbstverständlich, dass das Betätigungselement 37 auch anders ausgestaltet sein kann. An die erste und zweite Rampenscheibe 2 und 5 schließt sich jeweils eine Abstützscheibe 50 an, von denen jede ein Axialnadellager 52 trägt. Ebenso ist ein mit einem Gehäuse (nicht dargestellt) verbindbares Halteelement 22 mit der nicht dreh-schwenkbaren Rampenscheibe 5 verbunden. Ferner kann eine Öldurchführung 54 vorgesehen sein.

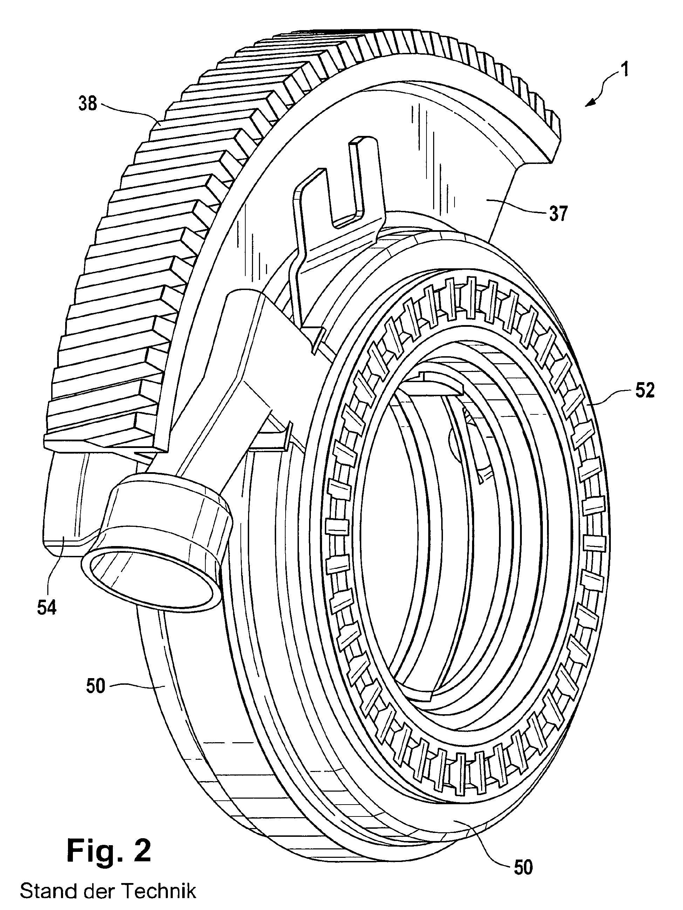

**Figur 2** zeigt die Vorspanneinheit 1 aus Figur 1 in perspektivischer Ansicht und als zusammengebaute Einheit. Das Betätigungselement 37, die Öldurchführung 54, die Abstützscheiben 50, die Axialnadellager 52, die beiden Rampenscheiben 2 und 5 und der Käfig 4 mit den Wälzkörpern 5 sind zu einer vormontierten Einheit zusammengefasst, die als Einheit in ein hierfür vorgesehenes Getriebe eingebaut werden kann.

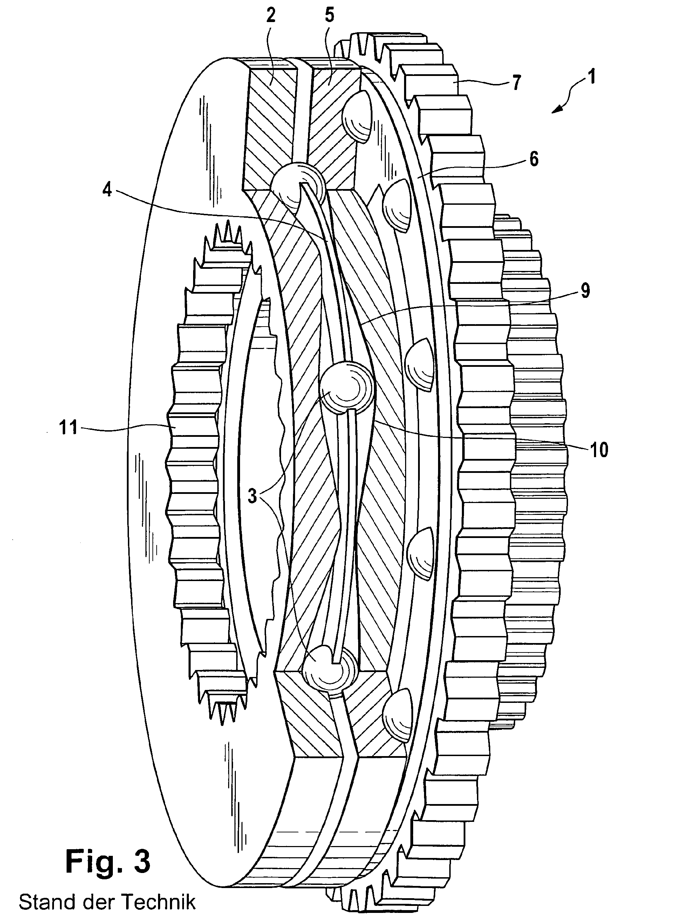

**Figur 3** zeigt eine perspektivische Ansicht einer anderen Ausführungsform einer Vorspanneinheit 1, die aus dem Stand der Technik bekannt ist. Hier sind Bauelemente der Vorrichtung teilweise geschnitten, um einen besseren Eindruck vom Aufbau der Vorspanneinheit 1 zu erhalten. Wie aus dieser Darstellung ersichtlich ist, besteht die Vorspanneinheit 1 im Wesentlichen aus einer ersten Rampenscheibe 2, einem Käfig 4, in dem mehrere Wälzlager 3 (Kugeln) angeordnet sind und einer zweiten Rampenscheibe 5. Die Oberseite der zweiten Rampenscheibe 5, welche keine Rampen 9, 10 eingeprägt hat, liegt an dem Axiallager 6 an. An das Axiallager 6 schließt sich die Anlaufscheibe 7 an. Außerdem weist die erste Rampenscheibe 2 innen eine Verzahnung 11 auf, die einen drehmomentfesten Eingriff in eine nicht dargestellte Getriebewelle zur Verfügung stellt.

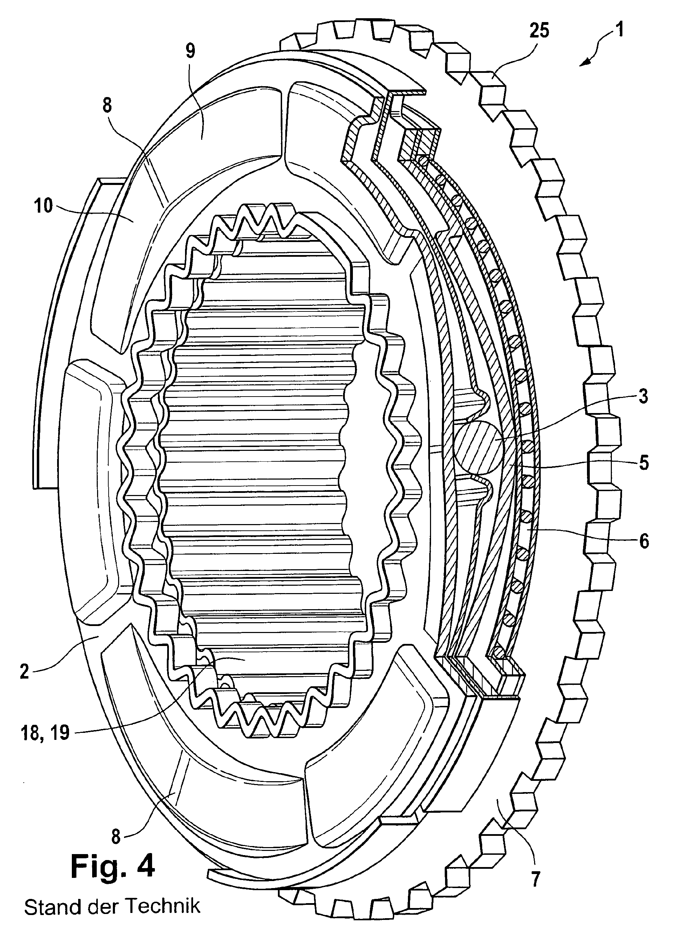

**Figur 4** zeigt eine perspektivische Ansicht einer weiteren Ausführungsform einer Vorspanneinheit 1, die aus dem Stand der Technik bekannt ist. Die erste Rampenscheibe 2 und die zweite Rampenscheibe 5 befinden sich dabei in einer derartigen Stellung zueinander, dass sich der Wälzkörper 3 an dem jeweils tiefsten Punkt der Rampenkontur 8 befindet. Jede Rampenkontur 8 umfasst eine erste Rampe 9 und eine zweite Rampe 10. Der zweiten Rampenscheibe 5 ist das Axiallager 6 benachbart. Ein Käfig 4 zur Halterung der Wälzkörper 3 hält zumindest die beiden Rampenscheiben 2, 5 und die Wälzkörper 3 formschlüssig aneinander. Die Muffe 19 ist für den drehmomentfesten aber axial verschiebbaren Eingriff mit einer nicht dargestellten Welle verzahnt. Die Verzahnung 20 ist aus wellenförmig geformtem Blech gebildet. Die zweite Rampenscheibe 5 ist wahlweise ein Zieh-Stanz-Prägebauteil aus einem Schmiede- oder Blechrohling. Alternativ dazu, kann die zweite Rampenscheibe 5 aus Rohlingen fließgepresst werden. An das Axiallager 6 schließt sich die Anlaufscheibe 7 an. Die Anlaufscheibe 7 ist vorzugsweise ein Stanz-Prägebauteil und weist innen so wie außen eine Verzahnung 25 für drehmomentfeste Verbindungen auf.

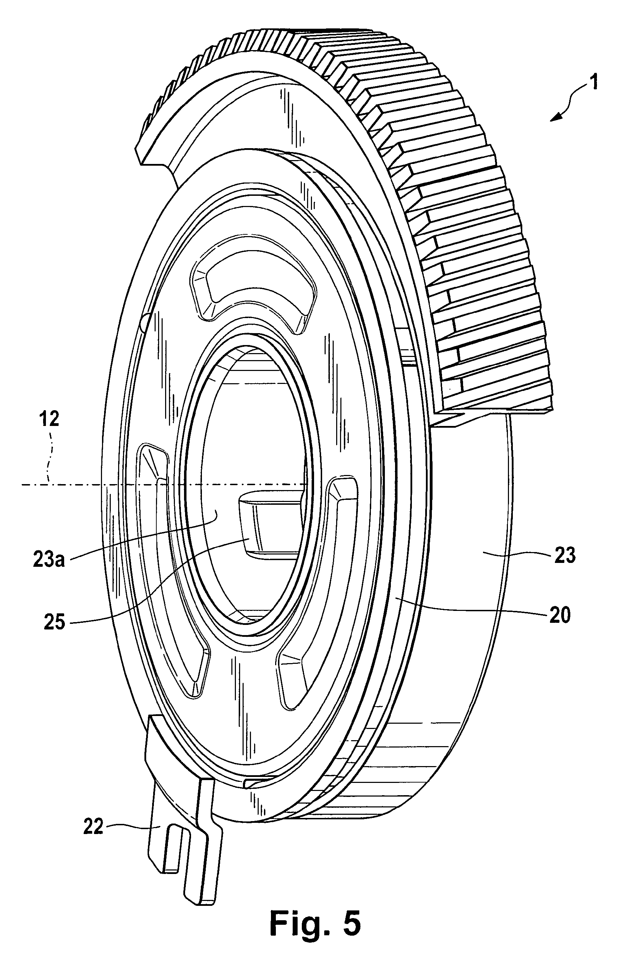

**Figur 5** zeigt eine perspektivische Ansicht einer als Baugruppe montierten erfindungsgemäßen Vorspanneinheit 1. Die erste Rampenscheibe 2 ist dabei in einen Haltetopf 20 gesetzt. Der Haltetopf 20 hat ein Halteelement 22 ausgeformt, das drehfest mit einem Gehäuse (nicht dargestellt) verbunden ist. Das Gehäuse ist z.B. das Getriebegehäuse, in das die erfindungsgemäße Vorspanneinheit 1 montiert wird. Der Haltetopf 20 ist zusammen mit den Rampenscheiben in einen Drehtopf 23 eingesetzt. Der Drehtopf 23 hat mehrere Konturen 25 ausgeformt, die mit entsprechenden Konturen (in dieser Darstellung nicht zu sehen) der dreh-schwenkbaren Rampenscheibe zusammenwirken, um bei Betätigung des Drehtopfes 23 einen axialen Hub der Vorspanneinheit 1 zu erhalten. Die Konturen 25 sind auf einem um die Achse 12 der Vorspanneinheit symmetrisch angeordneten Zylinder 23a des Drehtopfes 23 ausgebildet. Der Zylinder 23a greift dabei zumindest teilweise durch eine zentrale, kreisförmige Freisparung der beiden Rampenscheiben 2 und 5, sowie des Haltetopfes 20.

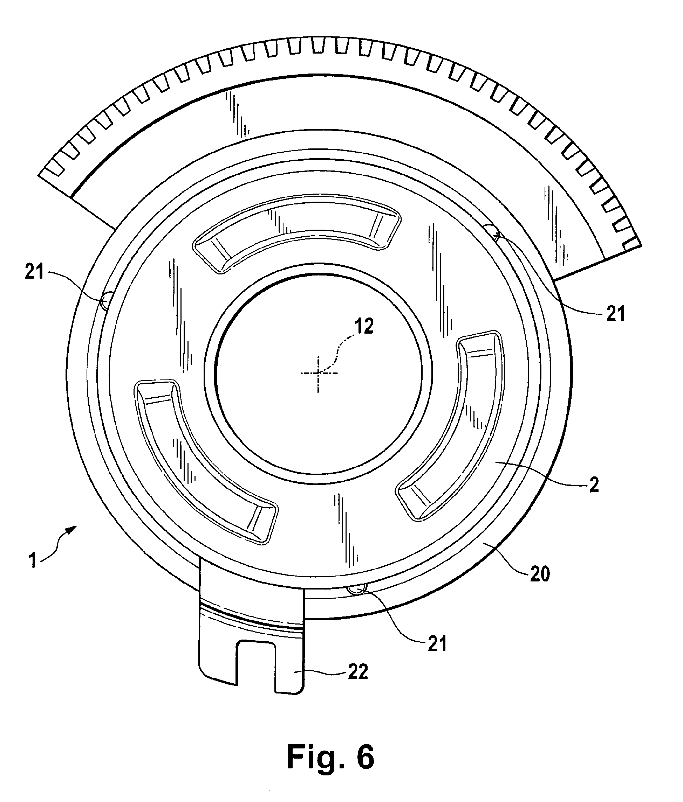

**Figur 6** zeigt eine Draufsicht einer als Baugruppe montierten erfindungsgemäßen Vorspanneinheit 1. Wie bereits in der Beschreibung zu Figur 5 erwähnt, hat der Haltetopf 20 ein Halteelement 22 ausgeformt, das drehfest mit einem Gehäuse verbunden ist. In der hier dargestellten Ausführungsform ist die erste Rampenscheibe 2 als nicht dreh-schwenkbare Rampenscheibe ausgebildet. Damit sichergestellt ist, dass die erste Rampenscheibe 2 nicht dreh-schwenkbar ist, ist zwischen der ersten Rampenscheibe 2 und dem Haltetopf 20 mindestens eine Linearführung in Richtung der Achse 12 der Vorspanneinheit 1 vorgesehen. Die Linearführung wird dadurch erreicht, dass am Haltetopf 20 und der ersten nicht dreh-schwenkbaren Rampenscheibe 2 jeweils paarweise Nuten ausgebildet sind, in denen zur Reduzierung der Reibung in Richtung der Achse 12 mehrere Wälzkörper 21 angeordnet sind. Hierzu werden Kugeln als Wälzkörper 21 bevorzugt.

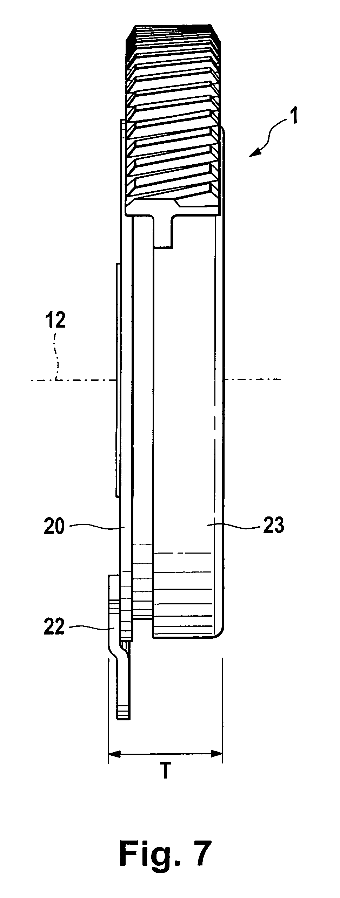

**Figur 7** zeigt eine Seitenansicht einer als Baugruppe montierten erfindungsgemäßen Vorspanneinheit 1. Hieraus ist deutlich ersichtlich, dass die vormontierte Vorspanneinheit 1 eine geringe Bautiefe T besitzt. Somit ist ein bauraumsparender Einbau der Vorspanneinheit 1 in ein Getriebe oder Ähnliches möglich. Ferner ist dadurch auch das Gewicht der Vorspanneinheit 1 reduziert. Alle Bauteile der erfindungsgemäßen Vorspanneinheit 1 sind um die Asche 12 herum angeordnet und bilden eine vormontierte Einheit.

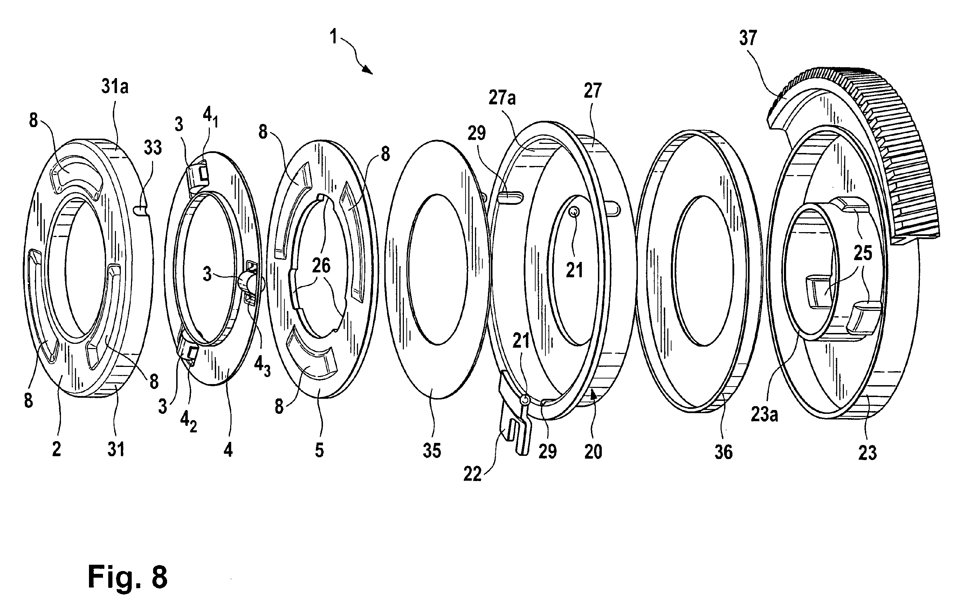

**Figur 8** zeigt eine perspektivische Ansicht der Explosionsdarstellung der erfindungsgemäßen Vorspanneinheit 1. Wie aus dieser Darstellung ersichtlich ist, besteht die Vorspanneinheit 1 gemäß dieser Ausführungsform aus einer ersten Rampenscheibe 2, einem Käfig 4 und einer zweiten Rampenscheibe 5. In der weiteren Beschreibung der Erfindung werden die in den Käfig 4 eingesetzten Wälzkörper 3 als Rollen bezeichnet. Ebenso sind in den Rampenscheiben 2 und 5 jeweils drei Rampenkonturen 8 ausgeformt. Es ist für einen Fachmann selbstverständlich, dass die in der Beschreibung erwähnte Anzahl an Wälzkörpern 3 und Rampenkonturen 8 nicht als Beschränkung der Erfindung aufgefasst werden kann. Der Käfig 4 hat folglich drei Aufnahmen $4_1$, $4_2$ und $4_3$ für die Wälzlager 3 ausgebildet. In der hier dargestellten Ausführungsform sind die Wälzlager 3 als Rollen ausgebildet. An den Käfig 4 schließen sich beidseitig die beiden Rampenscheiben 2 und 5 an. Die Rampenkonturen 8 können verschiedenartig ausgestaltet sein. Deren Ausgestaltung wird hier nicht ausdrücklich erwähnt, da dies nicht Gegenstand der Erfindung ist. Die Rampenkontur 8 ist zumindest derart ausgeformt, dass die dadurch gebildete Laufbahn 10 geeignet ist, die Radialkräfte der Vorspanneinheit 1 aufzunehmen. Die Kräfte werden über den Drehtopf 23 eingeleitet, der zur Betätigung der Vorspanneinheit 1 mit einem Betätigungssegment 37 in entsprechender Weise um die Achse 12 der Vorspanneinheit 1 geschwenkt wird.

Die erste Rampenscheibe 2, der Käfig 4 und die zweite Rampenscheibe werden zur Montage in den Haltetopf 20 eingesetzt. Der Haltetopf 20 selbst ist in den Drehtopf 23 eingesetzt. Zwischen der dreh-schwenkbaren Rampenscheibe (bei der hier dargestellten Ausführungsform ist dies die zweite Rampenscheibe 5) und dem Haltetopf 20 ist eine Anlaufscheibe 35 vorgesehen. Ebenso ist zwischen dem Haltetopf 20 und dem Drehtopf 23 eine Winkelscheibe 36 vorgesehen. Dadurch wird die Schwenkbarkeit der einzelnen Elemente untereinander erleichtert, da durch Lagerelemente der Anlaufscheibe 35 und der Winkelscheibe 36 die Reibung reduziert ist.

Der Haltetopf 20 hat eine radial umlaufende Wand 27 ausgeformt. An der Innenseite 27a der radial umlaufenden Wand 27 sind mehrere Laufbahnen 29 ausgeformt. Ebenso ist die nicht dreh-schwenkbaren Rampenscheibe (hier die erste Rampenscheibe 2) topfförmig ausgestaltet und besitzt somit ebenfalls eine radial umlaufende Wand 31, an deren Außenseite 31a Laufbahnen 33 ausgeformt sind. Im zusammengebauten Zustand der Vorspanneinheit sind die Laufbahnen 29 gegenüber den Laufbahnen 33 angeordnet. Besonders vorteilhat ist, wenn jeweils drei Laufbahnen 29 und 33 ausgebildet sind und diese jeweils in einem Winkel von 120° angeordnet sind. In jedem Paar der Laufbahnen 29 und 33 ist ein Wälzkörper 21 vorgesehen.

Der Drehtopf 23 hat einen um die Achse 12 angeordneten Zylinder 23a ausgeformt, an dem mehrere Konturen 25 ausgeformt sind. Diese Konturen 25 wirken mit entsprechenden Konturen 27 der dreh-schwenkbaren Rampenscheibe (hier die zweite Rampenscheibe 5) zusammen. Somit wird eine Schwenkbewegung des Drehtopfes 23 auf eine entsprechende Schwenkbewegung der zweiten Rampenscheibe 5 übertragen.

Die erste Rampenscheibe 2 und auch die zweite Rampenscheibe 5 sind vorzugsweise aus einem Blechrohling oder Stanz-Prägeteil gebildet, welche mittels Kaltumformung hergestellt werden. Mit einem entsprechenden Umformverfahren werden auch der Haltetopf und der Drehtopf 23 hergestellt.

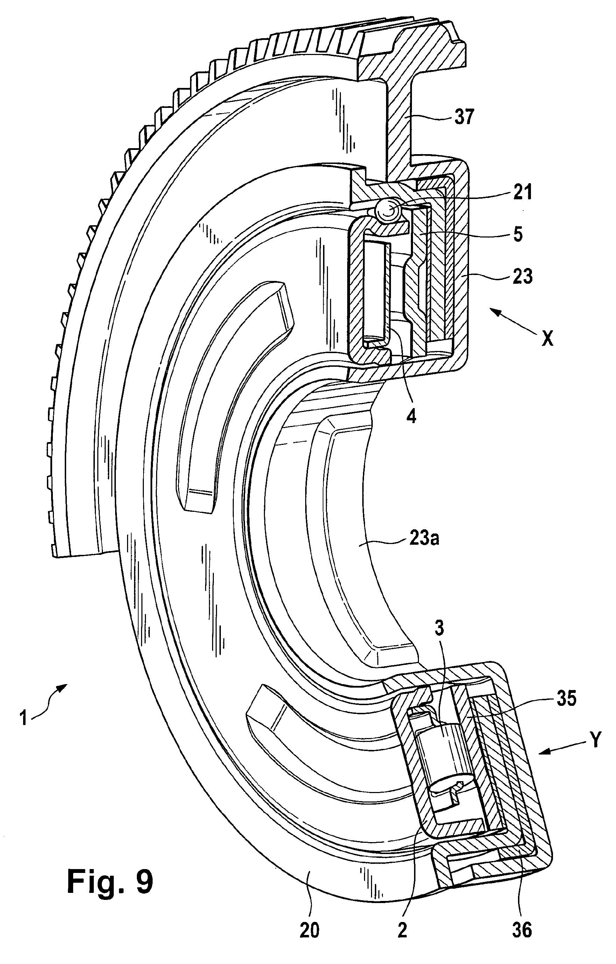

**Figur 9** zeigt eine Schnittansicht der als Baugruppe montierten erfindungsgemäßen Vorspanneinheit 1. Der Drehtopf 23 mit dem zentral angeordneten Zylinder 23a ist derart ausgestaltet, dass der Drehtopf 23 alle übrigen Bauelemente der Vorspanneinheit 1 aufnimmt und diese in der den Bauteilen zugewiesenen Beweglichkeit haltert. Dabei sind die übrigen Bauteile: die erste Rampenscheibe 2, der Käfig 4 mit den Wälzkörpern 3, die zweite Rampenscheibe 5, die Anlaufscheibe 35, der Haltetopf 20 und die Winkelscheibe 36.

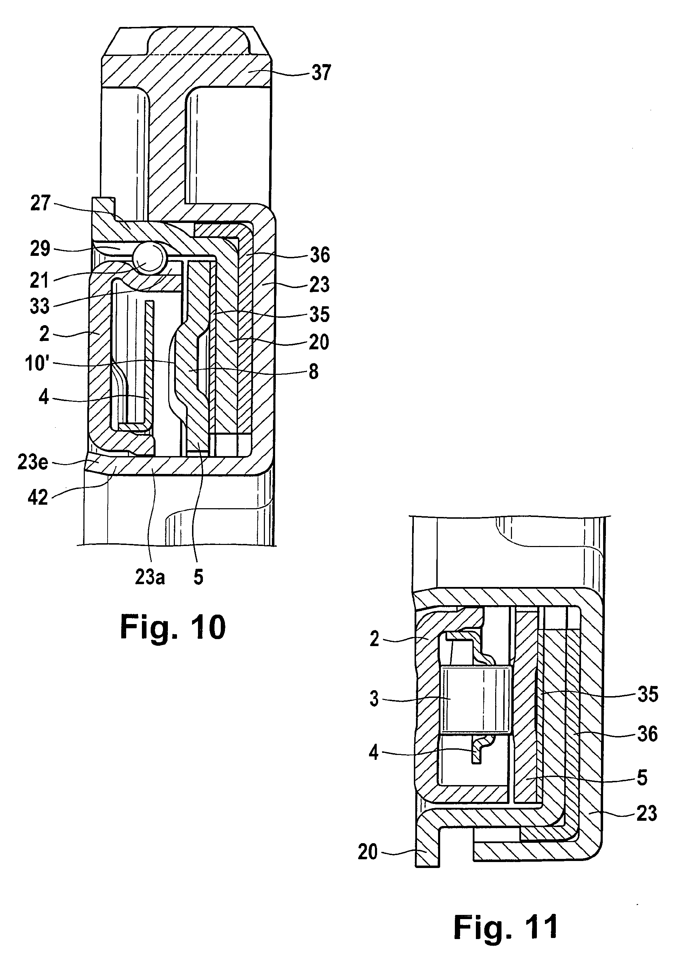

**Figur 10** zeigt eine Draufsicht auf die in Figur 9 mit X bezeichnete Schnittfläche der erfindungsgemäßen Vorspanneinheit 1. Ebenso ist in **Figur 11** eine Draufsicht auf die in Figur 9 mit Y bezeichnete Schnittfläche der erfindungsgemäßen Vorspanneinheit 1 dargestellt. Der am Drehtopf 23 ausgeformte Zylinder 23a hat an seinem freien Ende 23e eine Verstemmung 42 ausgebildet, die die gesamten Baugruppe der Vorspanneinheit 1 sichert. Ferner ist aus **Figur 10** das Zusammenspiel der Laufbahn 29 in der radial umlaufenden Wand 27 des Haltetopfes 20 mit der Laufbahn 33 in der radial umlaufenden Wand 31 der nicht dreh-schwenkbare Rampenscheibe (bei dieser Ausgestaltung die erste Rampenscheibe 2) zu erkennen. Die in den Laufbahnen 29 und 33 geführten Wälzkörper 21, bevorzugt Kugeln, ermöglichen eine Linearführung entlang der Achse 12 der Vorspanneinheit 1 und verhindern ein Verdrehen der zweiten Rampenscheibe 2. Aus **Figur 11** ist einer der drei Wälzkörpern 3 ersichtlich, die von dem Käfig 4 getragen werden. Die Wälzkörper 3 sind zwischen der ersten und der zweiten Rampenscheibe 2 und 5 vorgesehen und laufen auf den in den Rampenscheiben ausgeformten Rampenkonturen 8.

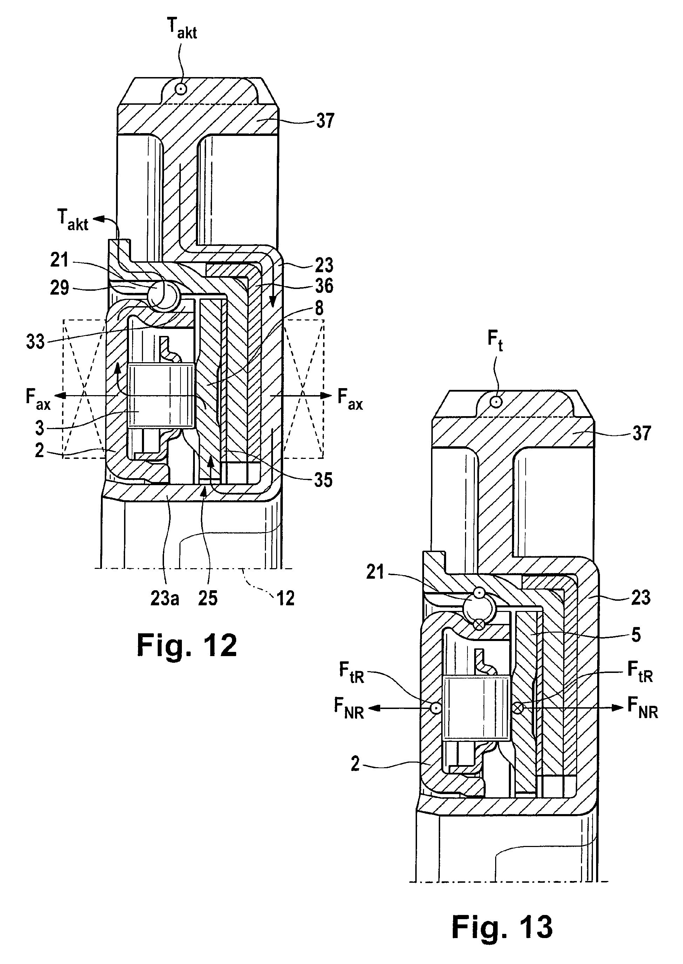

**Figur 12** verdeutlicht das Funktionsprinzip der erfindungsgemäßen Vorspanneinheit 1 bei der Betätigung des Drehtopfes 23. Das Stirnrad eines Elektromotors (nicht dargestellt) wirkt auf das Betätigungselement 37 des Drehtopfes 23 ein. Es resultiert eine Bewegungsrichtung $T_{akt}$ aus der Zeichenebene heraus. Diese Bewegung wird mittels der Konturen 25 am Zylinder 23a des Drehtopfes 23 auf die zweite Rampenscheibe 5 übertragen. Die zweite Rampenscheibe 5 verdreht sich in Bezug auf die erste Rampenscheibe 2 und die Wälzkörper 3 laufen auf den Rampenkonturen 8 ab. Die erste Rampenscheibe 2 ist nicht dreh-schwenkbar, so dass diese eine Bewegung in Richtung der Achse 12 ausführt. Die Vorspanneinheit 1 übt somit auch eine Kraft in $F_{ax}$ in axialer Richtung aus. Zur Erleichterung der Bewegung in Richtung der Achse 12, rollen die Wälzkörper 21 in den Laufbahnen 29 und 31 ab.

**Figur 13** zeigt in schematischer Darstellung die bei der erfindungsgemäßen Vorspanneinheit 1 wirkenden Kräfte. Ein Kraft $F_t$ wirkt auf das Betätigungselement 37. Diese Kraft $F_t$ ist aus der Zeichenebene heraus gerichtet. Die Kräfte $F_L$, welche auf die Wälzkörper 21 im Bereich der Laufbahnen 29 und 31 wirken, heben sich gegenseitig auf. Ebenso heben sich die Kräfte $F_{tR}$ im Bereich der Wälzkörper zwischen der ersten Rampenscheibe 2 und der zweiten Rampenscheibe 5 auf. Aufgrund des Hubs zwischen der ersten Rampenscheibe 2 und der zweiten Rampenscheibe resultiert eine Kraft $F_{NR}$.

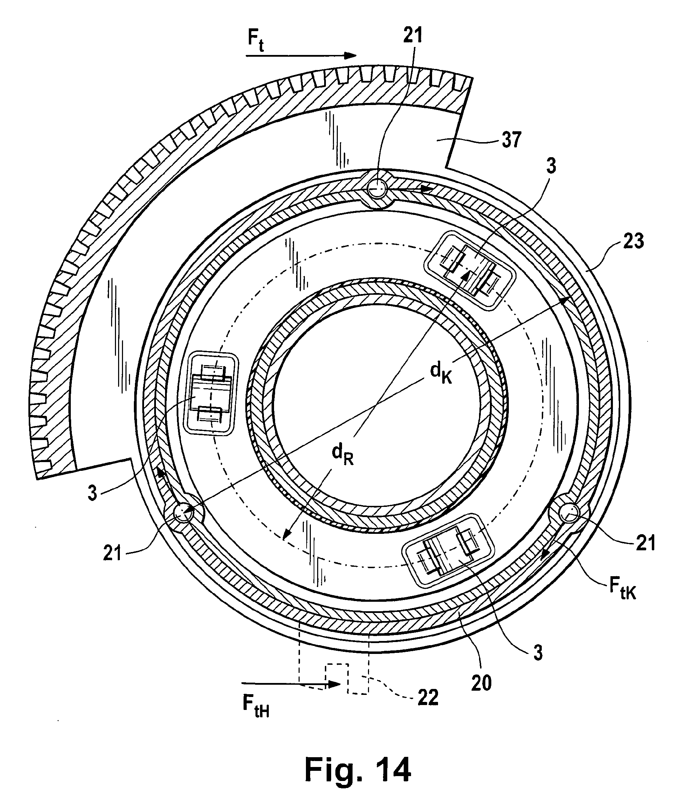

**Figur 14** zeigt eine schematische Draufsicht auf die erfindungsgemäße Vorspanneinheit 1 und der wirkenden Kräfte. Die Schwenkung oder Verdrehung des Drehtopfes 23 wird durch die Einwirkung einer Kraft $F_t$ auf das Betätigungselement 37 erreicht. Die Wälzkörper 3 zwischen der der ersten Rampenscheibe 2 und der zweiten Rampenscheibe 5 sind im Käfig 4 auf einem Kreis mit dem Durchmesser $d_R$ abgeordnet. Die zwischen den beiden Laufbahnen 29 und 33 geführten Wälzkörper 21 sind auf einem Kreis mit dem Durchmesser $d_K$ angeordnet, wobei $d_K$ größer ist als $d_R$. Auf die Wälzkörper 21 wirkt eine radiale Kraft $F_{tK}$ ein. Auf das am Haltetopf 20 angebrachte Halteelement 22, welche mit dem nicht dargestellten Gehäuse verbunden wird, wirkt eine Kraft $F_{tH}$. Dadurch wird die Verdrehsicherung des Haltetopfes 20 sichergestellt. Für die bei der Vorspanneinheit herrschenden Kräfte gilt die folgende Beziehung:

$$F_{tK} \; < \; F_{tR} \; << \; F_{NR}$$

Die Erfindung wurde unter Bezugnahme auf eine bevorzugte Ausführungsform beschrieben. Es ist für einen Fachmann selbstverständlich, dass Änderungen und Abweichungen der Erfindung gemacht werden können, ohne dabei den Schutzbereich der nachstehenden Ansprüche zu verlassen.

**Patentansprüche**

1. Vorspanneinheit (1) mit einer ersten Rampenscheibe (2) und einer zweiten Rampenscheibe (5), die beide mehrere Rampenkonturen (8) in einer Seite einer ringförmigen Fläche der Rampenscheiben (2, 5) ausgeformt haben, so dass zwischen den jeweiligen Rampenkonturen (8) der ersten Rampenscheibe (2) und der zweiten Rampenscheibe (5) mehrere Wälzkörper (3) derart angeordnet sind, dass in der Vorspanneinheit (1) durch Dreh-Schwenken einer der beiden Rampenscheiben (2, 5) relativ zu der anderen nicht dreh-schwenkbaren Rampenscheibe (5, 2) um eine Achse (12) die Wälzkörper (3) an den Rampenkonturen (8) auf- und/oder absteigen, wobei die Wälzkörper (3) in einem Käfig (4) rollend gehaltert sind **dadurch gekennzeichnet, dass** zumindest die erste Rampenscheibe (2), der Käfig (4) und die zweite Rampenscheibe (5) in einen Haltetopf (20) gesetzt sind, der mit mindestens einem Halteelement (22) drehfest mit einem Gehäuse verbunden ist und dass zwischen dem Haltetopf (20) und der nicht dreh-schwenkbaren Rampenscheibe (5, 2) zur Axialführung mehrere Wälzkörper (21) angeordnet sind.

2. Vorspanneinheit (1) nach Anspruch 1, **dadurch gekennzeichnet, dass** zumindest die erste Rampenscheibe (2), der Käfig (4), die zweite Rampenscheibe (5) und der Haltetopf (20) in einen Drehtopf (23) eingesetzt sind, der mit der dreh-schwenkbaren Rampenscheibe (5, 2) zusammenwirkt.

3. Vorspanneinheit (1) nach Anspruch 2, **dadurch gekennzeichnet, dass** der Drehtopf (23) mehrere Konturen (25) ausgeformt hat, die mit entsprechenden Konturen (27) der dreh-schwenkbaren Rampenscheibe (5, 2) zusammenwirken.

**4.** Vorspanneinheit (1) nach Anspruch 3, **dadurch gekennzeichnet, dass** die Konturen (25) des Drehtopfes (23) eine keilförmige Gestalt aufweisen.

**5.** Vorspanneinheit nach Anspruch 1, **dadurch gekennzeichnet, dass** der Haltetopf (20) eine radial umlaufende Wand (27) ausgebildet hat, die für jeden der Wälzkörper (21) eine Laufbahn (29) ausgebildet hat und dass die nicht dreh-schwenkbare Rampenscheibe (5, 2) ebenfalls eine radial umlaufende Wand (31) ausgeformt hat, die ebenfalls für jeden der Wälzkörper (21) eine Laufbahn (33) ausgebildet hat, so dass die nicht dreh-schwenkbare Rampenscheibe (5, 2) und der Haltetopf (20) relativ zueinander axial bewegbar sind.

**6.** Vorspanneinheit (1) nach Anspruch 5, **dadurch gekennzeichnet, dass** die Laufbahnen (29) in der radial umlaufenden Wand (27) des Haltetopfes (20) und die Laufbahnen (33) in der radial umlaufenden Wand (31) der nicht dreh-schwenkbaren Rampenscheibe (5, 2) gleich verteilt angeordnet sind.

**7.** Vorspanneinheit nach Anspruch 5, **dadurch gekennzeichnet, dass** jeweils drei Laufbahnen (29, 33) ausgebildet sind, in denen jeweils ein als Kugel ausgeformter Walzkörper (21) geführt ist.

**8.** Vorspanneinheit nach Anspruch 1, **dadurch gekennzeichnet, dass** zwischen der dreh-schwenkbaren Rampenscheibe (5, 2) und dem Haltetopf (20) eine Anlaufscheibe (35) vorgesehen ist und dass zwischen dem Haltetopf (20) und dem Drehtopf (23) eine Winkelscheibe (37) vorgesehen ist.

**9.** Vorspanneinheit nach Anspruch 1, **dadurch gekennzeichnet, dass** am Drehtopf (23) ein Betätigungselement (37) ausgebildet ist, über das der Drehtopf (23) um die Achse (12) schwenkbar ist.

**10.** Vorspanneinheit nach Anspruch 1, **dadurch gekennzeichnet, dass** jede Rampenkontur (8) eine erste Rampe (9) und eine zweite Rampe (10) umfasst.

**11.** Vorspanneinheit (1) nach Anspruch 1, **dadurch gekennzeichnet, dass** jede Rampenkontur (8) eine im Wesentlichen einheitliche Lauffläche (40) ausgeformt hat, die gegenüber der Achse (12) eine konstante Neigung besitzt.

**12.** Vorspanneinheit (1) nach Anspruch 1, **dadurch gekennzeichnet, dass** jede Rampenkontur (8) eine im Wesentlichen einheitliche Lauffläche (40) ausgeformt hat, die gegenüber der Achse (12) eine variable Neigung besitzt.

**13.** Vorspanneinheit (1) nach Anspruch 11, **dadurch gekennzeichnet, dass** die Laufflächen (10) eine Anfangskontaktstelle ($10_1$) und eine Endkontaktstelle ($10_2$) für die Wälzkörper (3) aufweisen, wobei an der Endkontaktstelle ($10_2$) für die Wälzkörper (3) ein Endanschlag (14) ausgeformt ist.

**14.** Vorspanneinheit (1) nach Anspruch 13, **dadurch gekennzeichnet, dass** der Endanschlag (14) am tiefsten Punkt der Laufbahn (10) ausgebildet ist.

**15.** Vorspanneinheit (1) nach Anspruch 1, **dadurch gekennzeichnet, dass** die Wälzkörper (3) zwischen der ersten und der zweiten Rampenscheibe (2, 5) als Rollen ausgebildet sind.

**16.** Vorspanneinheit (1) nach Anspruch 1, **dadurch gekennzeichnet, dass** die erste Rampenscheibe (2), der Käfig (4), die zweite Rampenscheibe (5), die Anlaufscheibe (35), der Haltetopf (20), die Winkelscheibe (37) und der Drehtopf (23) der Vorspanneinheit (1) zu einer vormontierten Einheit zusammengefügt sind.

**Claims**

**1.** Pretensioning unit (1) having a first ramp disc (2) and a second ramp disc (5) which both have a plurality of ramp contours (8) shaped in one side of an annular face of the ramp discs (2, 5), with the result that a plurality of rolling bodies (3) are arranged between the respective ramp contours (8) of the first ramp disc (2) and of the second ramp disc (5) in such a way that the rolling bodies (3) rise and/or fall on the ramp contours (8) in the pretensioning unit (1) by rotating/swivelling of one of the two ramp discs (2, 5) relative to the other non-rotatable/swivellable ramp disc (5, 2) about an axis (12), the rolling bodies (3) being secured in a cage (4) in a rolling manner, **characterized in that** at least the first ramp disc (2), the cage (4) and the second ramp disc (5) are placed into a holding cup (20) which is connected fixedly by way of at least one holding element (22) to a housing so as to rotate with it, and **in that** a plurality of rolling bodies (21) are arranged for axial guidance between the holding cup (20) and the non-rotatable/swivellable ramp disc (5, 2).

**2.** Pretensioning unit (1) according to Claim 1, **characterized in that** at least the first ramp disc (2), the cage (4), the second ramp disc (5) and the holding cup (20) are inserted into a rotating cup (23) which interacts with the rotatable/swivellable ramp disc (5, 2).

**3.** Pretensioning unit (1) according to Claim 2, **characterized in that** the rotating cup (23) has a plurality of contours (25) shaped into it which interact with corresponding contours (27) of the rotatable/swivellable ramp disc (5, 2).

4. Pretensioning unit (1) according to Claim 3, **characterized in that** the contours (25) of the rotating cup (23) have a wedge-shaped design.

5. Pretensioning unit according to Claim 1, **characterized in that** the holding cup (20) has a radially circumferential wall (27) formed on it which has a raceway (29) for each of the rolling bodies (21) formed on it, and **in that** the non-rotatable/swivellable ramp disc (5, 2) likewise has a radially circumferential wall (31) shaped on it which likewise has a raceway (33) for each of the rolling bodies (21) formed on it, with the result that the non-rotatable/swivellable ramp disc (5, 2) and the holding cup (20) can be moved axially relative to one another.

6. Pretensioning unit (1) according to Claim 5, **characterized in that** the raceways (29) are arranged in the radially circumferential wall (27) of the holding cup (20) and the raceways (33) are arranged in the radially circumferential wall (31) of the non-rotatable/swivellable ramp disc (5, 2) in an identically distributed manner.

7. Pretensioning unit according to Claim 5, **characterized in that** in each case three raceways (29, 33) are formed, in which in each case one rolling body (21) which is shaped as a ball is guided.

8. Pretensioning unit according to Claim 1, **characterized in that** a thrust plate (35) is provided between the rotatable/swivellable ramp disc (5, 2) and the holding cup (20), and **in that** an angled plate (37) is provided between the holding cup (20) and the rotating cup (23).

9. Pretensioning unit according to Claim 1, **characterized in that** an actuating element (37) is formed on the rotating cup (23), via which actuating element (37) the rotating cup (23) can be swivelled about the axis (12).

10. Pretensioning unit according to Claim 1, **characterized in that** each ramp contour (8) comprises a first ramp (9) and a second ramp (10).

11. Pretensioning unit (1) according to Claim 1, **characterized in that** each ramp contour (8) has a substantially uniform running face (40) shaped on it which has a constant inclination with respect to the axis (12).

12. Pretensioning unit (1) according to Claim 1, **characterized in that** each ramp contour (8) has a substantially uniform running face (40) shaped on it which has a variable inclination with respect to the axis (12).

13. Pretensioning unit (1) according to Claim 11, **characterized in that** the running faces (10) have an initial contact point ($10_1$) and an end contact point ($10_2$) for the rolling bodies (3), an end stop (14) being formed at the end contact point ($10_2$) for the rolling bodies (3).

14. Pretensioning unit (1) according to Claim 13, **characterized in that** the end stop (14) is formed at the lowest point of the raceway (10).

15. Pretensioning unit (1) according to Claim 1, **characterized in that** the rolling bodies (3) are formed as rollers between the first and the second ramp disc (2, 5).

16. Pretensioning unit (1) according to Claim 1, **characterized in that** the first ramp disc (2), the cage (4), the second ramp disc (5), the thrust plate (35), the holding cup (20), the angled plate (37) and the rotating cup (23) of the pretensioning unit (1) are joined together to form a preassembled unit.

**Revendications**

1. Unité de précontrainte (1) comprenant un premier disque à rampe (2) et un deuxième disque à rampe (5), dans lesquels sont formés plusieurs contours de rampe (8) dans un côté d'une surface annulaire des disques à rampes (2, 5), de telle sorte que plusieurs corps de roulement (3) soient disposés entre les contours de rampe (8) respectifs du premier disque à rampe (2) et du deuxième disque à rampe (5), de telle sorte que, dans l'unité de précontrainte (1), grâce à un pivotement en rotation de l'un des deux disques rampes (2, 5) par rapport à l'autre disque à rampe (5, 2) non pivotant en rotation autour d'un axe (12), les corps de roulement (3) montent et/ou descendent sur les contours de rampe (8), les corps de roulement (3) étant retenus de manière à roulier dans une cage (4), **caractérisée en ce qu'** au moins le premier disque à rampe (2), la cage (4) et le deuxième disque à rampe (5) sont placés dans un pot de retenue (20) qui est relié de manière solidaire en rotation à un boîtier à l'aide d'au moins un élément de retenue (22), et **en ce que** plusieurs corps de roulement (21) sont disposés entre le pot de retenue (20) et le disque à rampe (5, 2) non pivotant en rotation, pour le guidage axial.

2. Unité de précontrainte (1) selon la revendication 1, **caractérisée en ce qu'**au moins le premier disque à rampe (2), la cage (4), le deuxième disque à rampe (5) et le pot de retenue (20) sont insérés dans un pot rotatif (23) qui coopère avec le disque à rampe (5, 2) pivotant en rotation.

**3.** Unité de précontrainte (1) selon la revendication 2, **caractérisée en ce que** plusieurs contours (25) sont formés dans le pot rotatif (23), lesquels contours coopèrent avec des contours correspondants (27) du disque à rampe (5, 2) pivotant en rotation.

**4.** Unité de précontrainte (1) selon la revendication 3, **caractérisée en ce que** les contours (25) du pot rotatif (23) présentent une configuration en forme de clavette.

**5.** Unité de précontrainte selon la revendication 1, **caractérisée en ce qu'**une paroi radialement périphérique (27) est réalisée dans le pot de retenue (20), dans laquelle paroi est réalisé un chemin de roulement (29) pour chacun des corps de roulement (21), et **en ce qu'**une paroi radialement périphérique (31) est également formée dans le disque à rampe (5, 2) non pivotant en rotation, dans laquelle paroi est également réalisé un chemin de roulement (33) pour chacun des corps de roulement (21), de telle sorte que le disque à rampe (5, 2) non pivotant en rotation et le pot de retenue (20) soient mobiles axialement l'un par rapport à l'autre.

**6.** Unité de précontrainte (1) selon la revendication 5, **caractérisée en ce que** les chemins de roulement (29) sont disposés de manière uniformément répartie dans la paroi radialement périphérique (27) du pot de retenue (20) et les chemins de roulement (33) sont disposés de manière uniformément répartie dans la paroi radialement périphérique (31) du disque à rampe (5, 2) non pivotant en rotation.

**7.** unité de précontrainte selon la revendication 5, **caractérisée en ce que** trois chemins de roulement (29, 33) respectifs sont réalisés, dans lesquels est guidé à chaque fois un corps de roulement (21) formé en tant que bille.

**8.** Unité de précontrainte selon la revendication 1, **caractérisée en ce qu'**un disque de butée (35) est prévu entre le disque à rampe (5, 2) pivotant en rotation et le pot de retenue (20), et **en ce qu'**un disque coudé (37) est prévu entre le pot de retenue (20) et le pot rotatif (23).

**9.** unité de précontrainte selon la revendication 1, **caractérisée en ce qu'**un élément d'actionnement (37) est réalisé sur le pot rotatif (23), au moyen duquel élément d'actionnement le pot rotatif (23) peut être pivoté autour de l'axe (12).

**10.** Unité de précontrainte selon la revendication 1, **caractérisée en ce que** chaque contour de rampe (8) comporte une première rampe (9) et une deuxième rampe (10).

**11.** Unité de précontrainte (1) selon la revendication 1, **caractérisée en ce qu'**une surface de roulement (40) essentiellement uniforme est formée dans chaque contour de rampe (8), laquelle surface de roulement possède une inclinaison constante par rapport à l'axe (12).

**12.** Unité de précontrainte (1) selon la revendication 1, **caractérisée en ce qu'**une surface de roulement (40) essentiellement uniforme est formée dans chaque contour de rampe (8), laquelle surface de roulement possède une inclinaison variable par rapport à l'axe (12).

**13.** Unité de précontrainte (1) selon la revendication 11, **caractérisée en ce que** les surfaces de roulement (10) comprennent un point de contact initial ($10_1$) et un point de contact final ($10_2$) pour les corps de roulement (3), une butée de fin de course (14) étant formée au point de contact final ($10_2$) pour les corps de roulement (3).

**14.** Unité de précontrainte (1) selon la revendication 13, **caractérisée en ce que** la butée de fin de course (14) est réalisée au point le plus bas du chemin de roulement (10).

**15.** Unité de précontrainte (1) selon la revendication 1, **caractérisée en ce que** les corps de roulement (3) sont réalisés sous forme de rouleaux entre le premier et le deuxième disque à rampe (2, 5).

**16.** Unité de précontrainte (1) selon la revendication 1, **caractérisée en ce que** le premier disque à rampe (2), la cage (4), le deuxième disque à rampe (5), le disque de butée (35), le pot de retenue (20), le disque coudé (37) et le pot rotatif (23) de l'unité de précontrainte (1) sont assemblés pour former une unité prémontée.

**Fig. 1**

Stand der Technik

EP 2 297 475 B1

**Fig. 2**

Stand der Technik

**Fig. 3**

Stand der Technik

**Fig. 4**

Stand der Technik

1

12

23a

25

23

20

22

## Fig. 5

**Fig. 6**

**Fig. 7**

Fig. 8

**Fig. 9**

**Fig. 10**

**Fig. 11**

**Fig. 12**

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2008015
- DE 102005053555 B3
- US 5485904 A
- US 5620072 A
- DE 102004015271 B4